# EUROPEAN PATENT SPECIFICATION

(11) **EP 3 589 515 B1**
(45) Date of publication and mention of the grant of the patent: **26.05.2021**
(21) Application number: 18717978.3
(22) Date of filing: 05.03.2018
(51) Int. Cl.: B60N 2/07, B60N 3/04

(54) **MOVEABLE VEHICLE SEAT ASSEMBLY**
BEWEGLICHE FAHRZEUGSITZANORDNUNG
ENSEMBLE SIÈGE MOBILE DE VÉHICULE

(30) Priority: 03.03.2017 GB 201703449
(43) Date of publication of application: 08.01.2020
(73) Proprietor: J&P Coats Limited, Uxbridge, Middlesex UB11 1TD (GB)
(72) Inventor: DIRK, Ewen, 26817 Rhauderfehn (DE)
(74) Representative: Wilson Gunn
(86) International application number: PCT/GB2018/050555
(87) International publication number: WO 2018/158595

(56) References cited:
- JP-A- H11 192 870
- JP-A- 2007 069 809
- JP-U- S6 241 234
- JP-U- S6 297 044
- US-A- 6 145 911

## Description

### BACKGROUND TO THE INVENTION

### 1. FIELD OF THE INVENTION

The present invention relates to a seat assembly for a vehicle such as the front seat of a motor car, which is moveable within the vehicle to adjust its position.

Seats at the front of a car are typically mounted in a manner that permits their forward and backward position to be adjusted. To that end, the seats are mounted on tracks. Virtually all cars have carpets. To permit the translation of the seats along the tracks, the carpets have slits. Inevitably, the slits expose the tracks. This looks unsightly and, over time, debris falls into the slits and onto the tracks and can impede the smooth running of the seats along the tracks. Items dropped which fall into the slits can be difficult to retrieve. The present invention seeks to ameliorate these difficulties.

### 2. DESCRIPTION OF RELATED ART

The state of the art includes US US2013134751 which discloses a two-way zipper closeout for folding head restraint slots; DE20214102139 which discloses a seat cover for the seat of a motor vehicle; and DE102009056413 which discloses a motor vehicle seat, has flexible planar formation unit covering seat base frame in transverse direction. JP 2007 069809 A and JP S62 97044 U disclose seat assemblies from the prior art.

### SUMMARY OF THE INVENTION

The present invention provides an alternative. According to an embodiment of the present invention there is provided a seat assembly according to claim 1.

### BRIEF DESCRIPTION OF DRAWINGS

Embodiments, which are not part of the invention, and embodiments of the present invention will now be described, by way of example, and with reference to the accompanying drawings, in which:
Fig. 1 is a perspective view of a part of a seat assembly, which is not part of the invention;
Fig. 2 is a perspective view of the same part of seat assembly set out in Fig. 1;
Fig. 3 is a perspective view of a further embodiment of seat assembly, which is not part of the invention;
Fig. 4 is a perspective view of yet a further embodiment of seat assembly, which is not part of the invention;
Fig. 5A is a perspective view of an alternative embodiment of seat assembly having a different frame and stem configuration and which is according to the invention;
Fig. 5B is a further perspective view of the embodiment set out in Fig. 5A;
Fig. 5C is an enlarged view of portion A set out in Fig. 5B;
Fig. 6A is a perspective view of an alternative embodiment of seat assembly having a different frame and stem configuration and which is according to the invention;
Fig. 6B is an enlarged view of portion A set out in Fig. 6A;
Fig. 6C is a side view of the seat assembly set out in Fig. 6A;
Fig. 6D is an enlarged view of portion A set out in Fig. 6C; and
Fig. 6E is a reversed perspective bottom view of portion A set out in Fig. 6C.

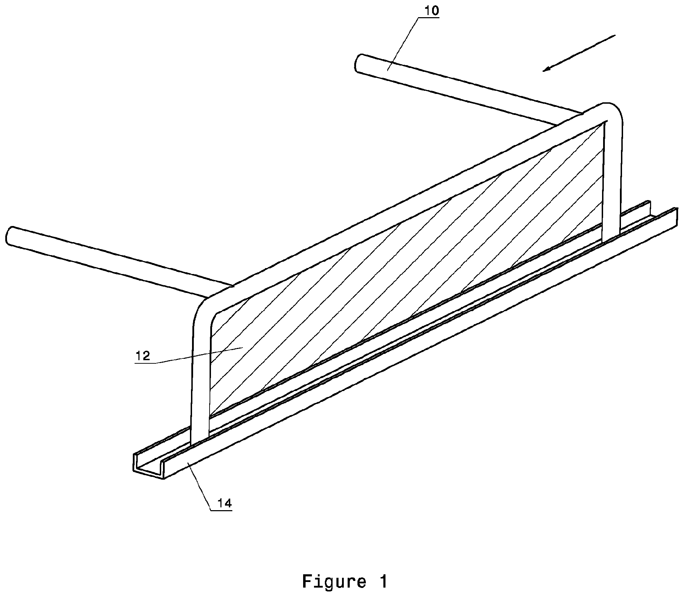

Referring now to Fig. 1 one half of a seat assembly for a vehicle such as, for example, a motor car, is illustrated (the other half having been omitted for clarity, but which is merely the mirror image). The assembly comprises a substantially rectangular frame 10 which supports a seat (which is omitted in the present drawings to provide greater clarity). A stem is in the form of a rectangular, planar web 12, extends downwardly from the frame 10 (and therefore downwardly also from the seat mounted on the frame). The lower (distal) end of the web 12 extends into a linear track 14 which is mounted to the floor of the vehicle. Runners mounted to the distal end of the web 12 provide for motion of the web 12, frame 10 and therefore the seat along the track, thereby to enable adjustment of the seat position. In the present illustration, the runners, being located within the track have been omitted for clarity. Such a general design of seat assembly is entirely standard and forms part of the state of the art.

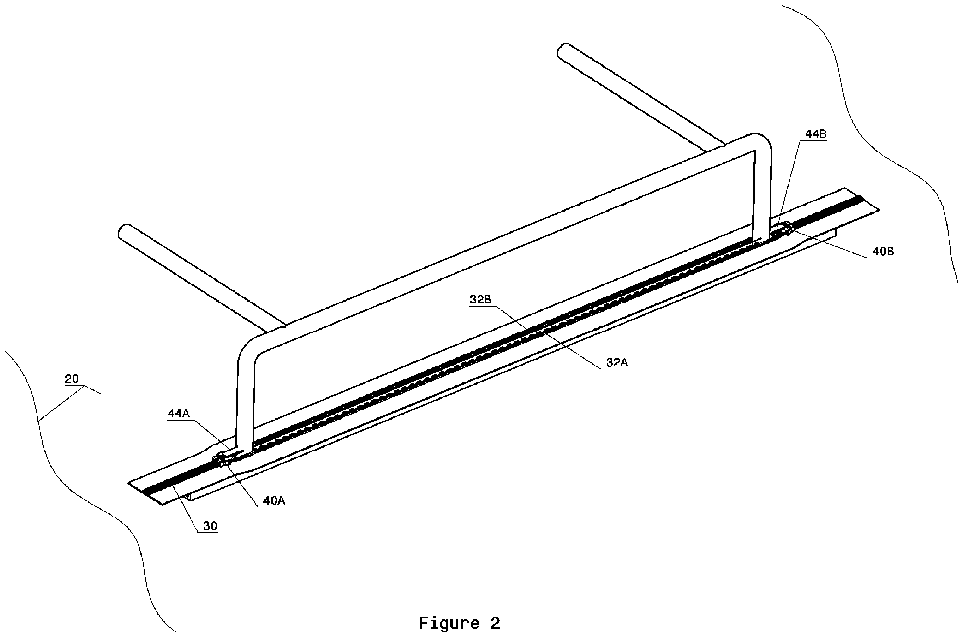

Referring now to Fig. 2, in accordance with the standard design of modern vehicles, a web, in the form of a carpet 20, is laid on the floor of the vehicle. To enable the longitudinal motion of the runner along the track 14 (and therefore movement of the seat over the floor to permit adjustment), the carpet has a longitudinal opening which lies substantially in register with the track 14. A zip fastener 30 located at the opening. The fastener 30 comprises a pair of mutually-opposing teeth 32A, 32B. The fastener additionally comprises and first and second sliders 40A, 40B. The sliders 40A, 40B are mounted on the zip teeth 32A,B facing in opposite directions - in the present example facing each other. A consequence of this is that, so that simultaneous movement of the sliders 40A, 40B along the teeth causes one slider to open the teeth and the other to close the teeth. Thus, simultaneous motion of the sliders 40A, 40B to the right in Fig. 2 causes slider 40A to close the fastener by interdigitating the teeth 32A, B; and causes slider 40B to open the fastener by extradigitating the zip teeth 32A, B. The sliders 40A, 40B are each connected to opposing sides of the stem provided by the web 12 by means of their respective pull tabs 44A and 44B. The fastener 30 is configured so that the zip teeth 32A, B are in a closed condition at all points along the zip other than between the two sliders - where the teeth 32A, B must be open to accommodate the web 12.

As a consequence of the above-described configuration, movement of the seat over the floor of the vehicle by means of motion of the runners in the track 14 is permitted by the longitudinal opening in the carpet. However, that opening is closed by the zip fastener at all points along its length other than that part which is required to remain open to permit the stem to extend through.

The illustrated seat assembly has one monolithic stem for each side of the seat (i.e. each track). In an alternative a plurality of narrower stems may be employed, whereupon, if desired, further pairs of zip sliders may be provided to ensure that only that amount of opening which is required to accommodate each stem is provided, with the zip teeth being closed at all other points along their length.

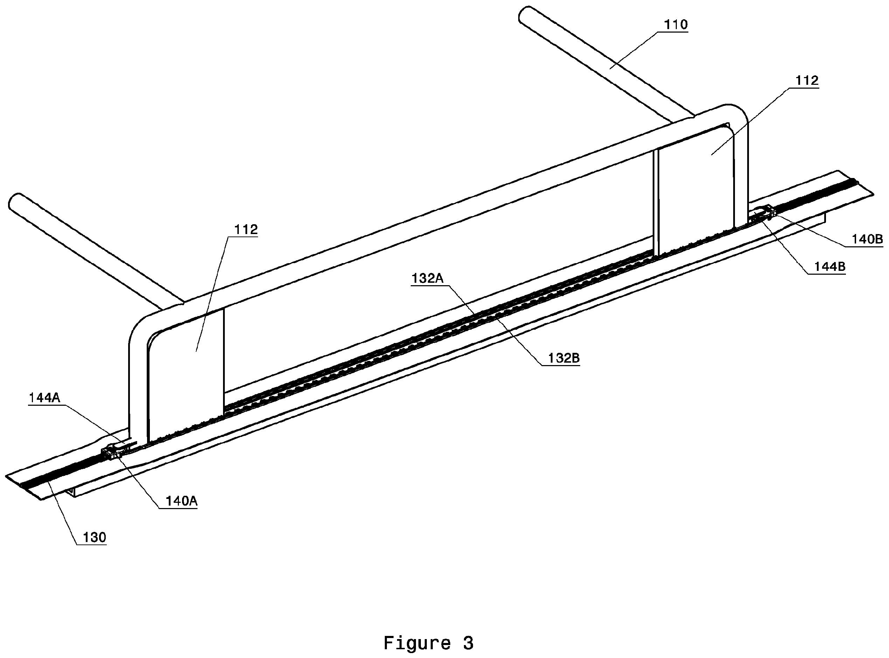

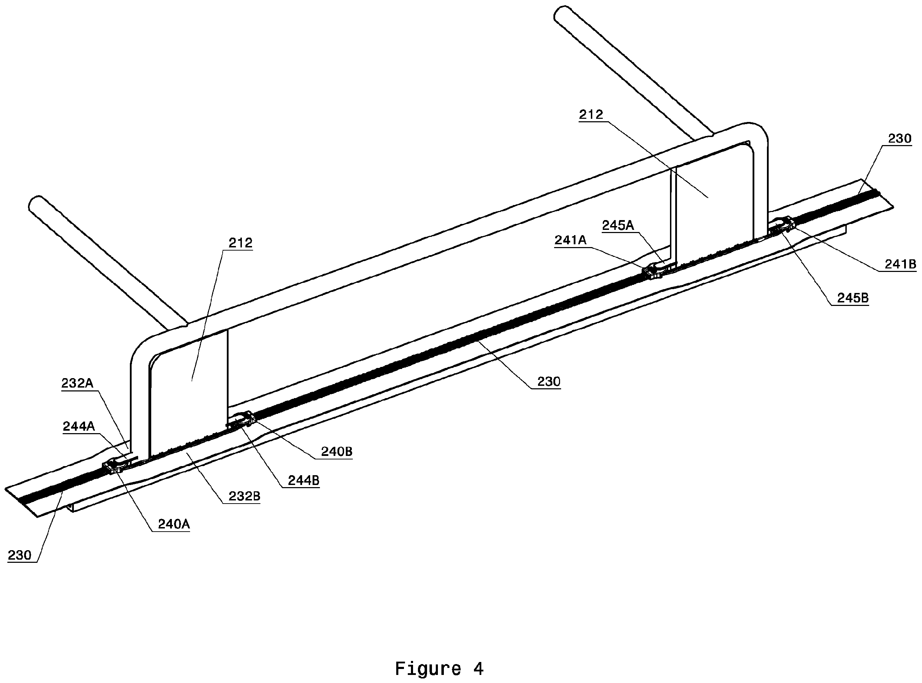

Referring now to Figs. 3 and 4, the single, monolithic and substantially rectangular stem 12 is replaced by two, discrete, smaller stems 112. In the first version of this embodiment shown in Fig. 3, there are only two sliders 140A, 140B connected to the stems 112 by pull tabs 144A, B respectively and, in the space between the two stems 112 (and therefore the two sliders 140A, 140B), the teeth 132A, B of the zip fastener 130 remain open. In the version shown in Fig. 4, two pairs of sliders 240A, 240B and 241A, 241B are provided with each pair being located either side of one of the stems 212 and, as with the previous embodiments, the sliders are fastened to the stems 212 by their pull tabs 244A, 244B and 245A, 245B respectively. This arrangement therefore provides for a structure of seat assembly which has plural stems to support the seat frame (and, therefore, the seat) for motion along the track and yet which ensures that the opening required to permit motion along the track is closed at all points along the track save for those where the stems are located (wherever that may be).

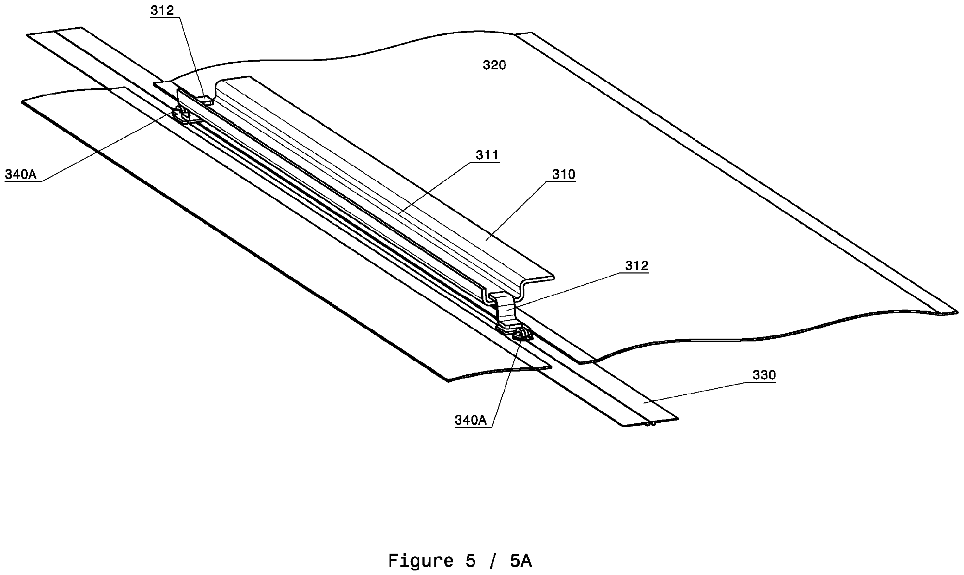

Referring to Fig. 5A-C, an alternative seat assembly according to the invention is shown. The frame 310 to which the seat is mounted is formed including a U-shaped channel 311 and the frame is mounted to two stems 312 having an extended Z configuration; the stems being connected to the frame 310 in the base of the channel. The stems 312 are each mounted, as previously, upon runners within a track both of which are omitted from Fig. 5A-C. Sliders 340A, B open and close the teeth of a zip fastener 330 as previously with the configuration shown in Fig. 5A-C being the same as that of Fig. 3. As with the previous embodiments, the sliders 340A, 340B are fastened to the stems 312 by their pull tabs 344A, 344B, respectively.

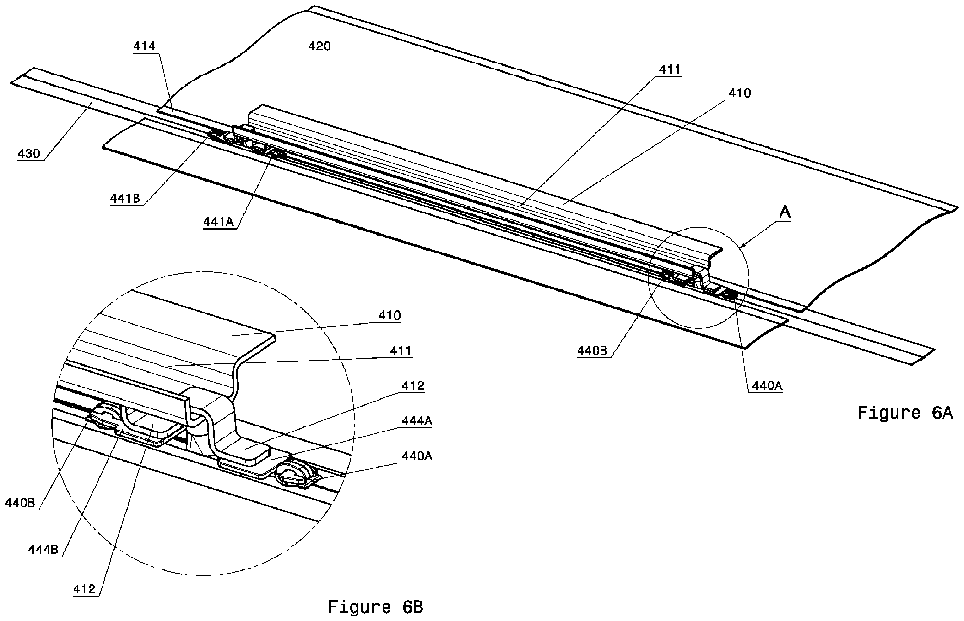

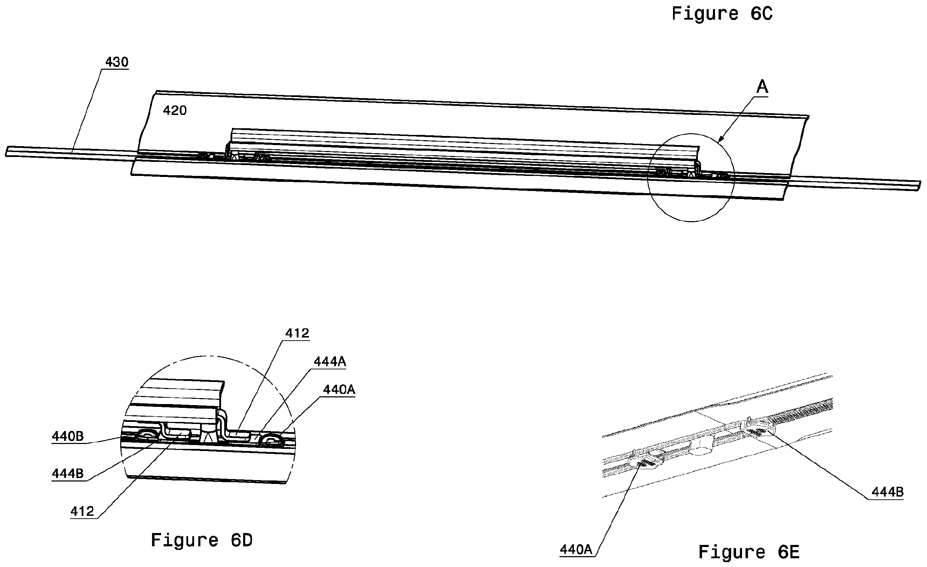

Referring to Fig. 6A-C, an alternative seat assembly according to the invention is shown, as in the embodiment of Fig. 5A-C, however two pairs of sliders 440A, 440B and 441A, 441B may also be provided however, as in the embodiment of Fig. 4. In the version shown in Fig. 6, the frame 410 to which the seat is mounted is formed including a U-shaped channel 411 and the frame is mounted to four stems 412, each having an extended Z configuration; the stems being connected to the frame 410 in the base of the channel. Two pairs of sliders 440A, 440B and 441A, 441B are provided with each pair being located either side of a pair of stems. As with the previous embodiments, the sliders 440A, 440B and 441A, 441B are fastened to the stems 412 by their pull tabs 444A, 444B and 445A, 445B respectively. The stems 412 are each mounted, as previously, upon runners within a track both of which are omitted from Fig. 6A-C. Sliders 440A, 440B and 441A, 441B open and close the teeth of a zip fastener 430 as previously with the configuration shown in Fig. 6A-C being the same as that of Fig. 4. This arrangement therefore provides for a structure of seat assembly which has plural stems to support the seat frame (and, therefore, the seat) for motion along the track and yet which ensures that the opening required to permit motion along the track is closed at all points along the track save for between the stems of each pair of sliders 440A, 440B and 441A, 441B (wherever that may be).

In a further modification, the zip fastener is provided in the style of an invisible fastener - having a configuration akin to that of a fastener employed to close a dress.

The various modifications are not limited in their application to the embodiments in connection with which they were first disclosed. Thus each modification is applicable to each Z embodiment insofar as the resulting seat assembly belongs to the scope defined by the appended claims.

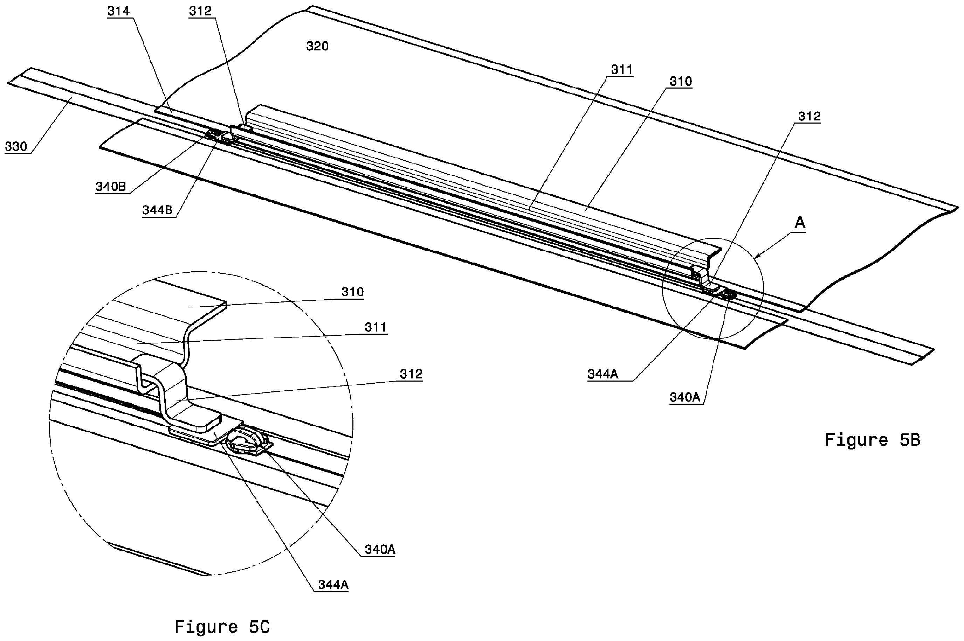

For example, therefore, an invisible fastener is applicable in application each of the embodiments of Figs 2 to 6; and the alternative assembly configuration of Figs. 5 and 6 is equally applicable to the embodiments of Figs 2 to 4 insofar as the arrangement of zip sliders and stems is concerned and insofar as the resulting seat assembly belongs to the scope defined by the appended claims.

## Claims

1. A seat assembly for a vehicle comprising:
a stem (312, 412)
extending downwardly from the seat and having a runner at its distal end;
the runner moveably engages a track (14) on the floor of the vehicle to permit motion of the seat over the floor;
a web covering having a longitudinal opening which lies substantially in register with the track to permit movement of the runner along the track;
the opening having a zip fastener (330, 430) comprising a pair of mutually-opposing teeth (32A, 32B) and first (340A, 440A, 441A) and second (340B, 440B, 441B) sliders mounted on the zip teeth in opposite directions, whereby simultaneous movement of the sliders along the teeth causes one slider to open the teeth and the other to close the teeth; wherein
the sliders are connected to opposing sides of the stem and the teeth are in a closed condition at all points along the zip other than between the two sliders,
**characterised in that** the stem has an extended z-configuration.

2. A seat assembly as claimed in claim 1, wherein a plurality of stems (112) extend downwardly from the seat, each stem having a runner at its distal end.

3. A seat assembly as claimed in claim 2, wherein sliders (240A, 240B) are connected to opposing sides of each stem (112) and the teeth are in a closed condition at all points along the zip save for those where stems are located.

4. A seat assembly as claimed in claim 1, wherein a group of at least two stems (412) are provided adjacent each other and said first (440A) and second (440B) sliders are maintained on opposing sides of the stems.

5. A seat assembly as claimed in claim 4, wherein the teeth are in a closed condition at all points along the zip save for those where stems are located.

6. A seat assembly as claim in any preceding claim, wherein the zip fastener is provided as an invisible zip fastener.

## Patentansprüche

1. Sitzmontage für ein Fahrzeug, umfassend:
einen Schaft (312, 412), der sich von dem Sitz nach unten erstreckt und an seinem distalen Ende eine Schiene aufweist;
wobei die Schiene beweglich in eine Schienenführung (14) auf dem Boden des Fahrzeugs greift, um die Bewegung des Sitzes über den Boden zu ermöglichen;
eine Bahnabdeckung mit einer Längsöffnung, die im Wesentlichen in Übereinstimmung mit der Schienenführung liegt, um eine Bewegung der Schiene entlang der Schienenführung zu ermöglichen;
wobei die Öffnung einen Reißverschluss (330, 430) aufweist, der ein Paar einander gegenüberliegender Zähne (32A, 32B) und einen ersten (340A, 440A, 441A) und einen zweiten (340B, 440B, 441B) Schieber umfasst, die an den Reißverschlusszähnen in entgegengesetzten Richtungen angebracht sind, wodurch eine gleichzeitige Bewegung der Schieber entlang der Zähne bewirkt, dass ein Schieber die Zähne öffnet und der andere die Zähne schließt; wobei
die Schieber an gegenüberliegenden Seiten des Schafts angebracht sind und die Zähne an allen Punkten entlang des Reißverschlusses, außer zwischen den beiden Schiebern, in einem geschlossenen Zustand sind
**dadurch gekennzeichnet, dass** der Schaft eine erweiterte z-Konfiguration aufweist.

2. Sitzmontage nach Anspruch 1, wobei sich mehrere Schafte (112) von dem Sitz nach unten erstrecken und jeder Schaft an seinem distalen Ende eine Schiene aufweist.

3. Sitzmontage nach Anspruch 2, wobei Schieber (240A, 240B) mit den gegenüberliegenden Seiten jedes Schafts (112) verbunden sind und die Zähne an allen Punkten entlang des Reißverschlusses mit Ausnahme der Stellen, an denen sich die Schafte befinden, in einem geschlossenen Zustand sind.

4. Sitzmontage nach Anspruch 1, wobei eine Gruppe von mindestens zwei Schafte (412) nebeneinander vorgesehen ist und die ersten (440A) und zweiten (440B) Schieber auf gegenüberliegenden Seiten der Schafte gehalten werden.

5. Sitzmontage nach Anspruch 4, wobei sich die Zähne an allen Punkten entlang des Reißverschlusses mit Ausnahme derjenigen, an denen sich die Schafte befinden, in einem geschlossenen Zustand befinden.

6. Sitzmontage nach einem der vorhergehenden Ansprüche, wobei der Reißverschluss als unsichtbarer Reißverschluss ausgebildet ist.

## Revendications

1. Ensemble siège pour un véhicule comprenant :
une tige (312, 412) s'étendant vers le bas depuis le siège et comportant un galet à son extrémité distale ;
le galet entre en prise mobile avec un rail (14) sur le plancher du véhicule pour permettre un mouvement du siège par-dessus le plancher ;
une couverture en bande présentant une ouverture longitudinale qui repose sensiblement en alignement avec le rail pour permettre le déplacement du galet le long du rail ;
l'ouverture présentant une fermeture à glissière (330, 430) comprenant une paire de dents (32A, 32B) mutuellement opposées et des premier (340A, 440A, 441 A) et second (340B, 440B, 441B) curseurs montés sur les dents de glissière dans des directions opposées, moyennant quoi un déplacement simultané des curseurs le long des dents amène un curseur à ouvrir les dents et l'autre à fermer les dents ; dans lequel
les curseurs sont reliés à des côtés opposés de la tige et les dents sont dans un état fermé à tous les points le long de la glissière autres qu'entre les deux curseurs, **caractérisé en ce que** la tige présente une configuration en z étendue.

2. Ensemble siège selon la revendication 1, dans lequel une pluralité de tiges (112) s'étendent vers le bas depuis le siège, chaque tige comportant un galet à son extrémité distale.

3. Ensemble siège selon la revendication 2, dans lequel des curseurs (240A, 240B) sont reliés à des côtés opposés de chaque tige (112) et les dents sont dans un état fermé à tous les points le long de la glissière sauf ceux où se situent les tiges.

4. Ensemble siège selon la revendication 1, dans lequel un groupe d'au moins deux tiges (412) sont disposées de manière adjacente les unes aux autres et lesdits premier (440A) et second (440B) curseurs sont maintenus sur des côtés opposés des tiges.

5. Ensemble siège selon la revendication 4, dans lequel les dents sont dans un état fermé à tous les points le long de la glissière sauf ceux où se situent les tiges.

6. Ensemble siège selon une quelconque revendication précédente, dans lequel la fermeture à glissière est fournie en tant que fermeture à glissière invisible.
